# EUROPEAN PATENT SPECIFICATION

(11) **EP 3 216 829 B1**
(45) Date of publication and mention of the grant of the patent: **18.03.2020**
(21) Application number: 15857221.4
(22) Date of filing: 03.11.2015
(51) Int. Cl.: C08L 23/08, C08L 23/14, C08L 23/18, C08J 5/00

(54) **POLYETHYLENE RESIN COMPOSITION AND MOLDED PRODUCT PRODUCED FROM SAME**
POLYETHYLENHARZZUSAMMENSETZUNG UND DARAUS HERGESTELLTES FORMPRODUKT
COMPOSITION DE RÉSINE POLYÉTHYLÈNE ET PRODUIT MOULÉ OBTENU À PARTIR DE CELLE-CI

(30) Priority: 05.11.2014 KR 20140152922
(43) Date of publication of application: 13.09.2017
(73) Proprietor: Hanwha Total Petrochemical Co., Ltd., Chungcheongnam-do 356-874 (KR)
(72) Inventor: KIM, Dong Jin, Seosan-si Chungcheongnam-do 356-874 (KR); LEE, Goo Hyeong, Seosan-si Chungcheongnam-do 356-874 (KR)
(74) Representative: Bachinger-Fuchs, Eva-Maria
(86) International application number: PCT/KR2015/011674
(87) International publication number: WO 2016/072684

(56) References cited:
- WO-A1-2008/136849
- JP-A- 2004 123 995
- JP-A- 2005 320 526
- JP-A- 2011 231 316
- KR-A- 20100 050 105
- KR-A- 20140 060 871

## Description

### Field

The present invention relates to a multimodal polyethylene resin composition demonstrating superb processability and flexural modulus in manufacturing a molded product as well as high environmental stress crack resistance (ESCR), and a molded product manufactured therefrom.

### Description of the Related Art

Nowadays, according to diversification of packaging containers and an increasing trend toward separate collection of recyclables in an environmental aspect, use of bottle cap materials, such as polyethyleneterephthalate, in glass bottles or beverage containers, is widespread and growing. High-density polyethylene or polypropylene is mainly used as a material of a plastic bottle cap. The high-density polyethylene or polypropylene bottle cap has several advantages, including lightness in weight, anti-corrosion, excellent moldability and design diversity, and is increasingly used, compared to a conventional aluminum bottle cap. In particular, since the high density polyethylene is more flexible than polypropylene, it can advantageously maintain sealability of a beverage container without using an inner liner, unlike the polypropylene bottle cap. In an attempt to reduce a manufacturing cost of the bottle cap according to the widespread use of polyethylene as a material for a bottle cap, methods for obtaining bottle cap materials having excellent flowability to increase the yield per unit time owing to high-speed processing performance and for reducing the unit weight of a bottle cap (for attaining slim and lightweight bottle caps) are being proposed.

In order to achieve slimness and lightness, a material for use in a bottle cap should possess excellent flowability for attaining high-speed processing performance while having excellent flexural modulus and environmental stress crack resistance (ESCR). However, when a polyethylene material for use in the conventional bottle cap polyethylene has a high flexural modulus or flowability, it may be poor in ESCR, making it difficult to be suitably used for a soda drink bottle. To overcome the problems, improved polyethylene resin compositions were proposed in Korean Patent Application KR10-0848526, International Patent Application WO2008/136849, and European Patent Application EP2017302B1. However, the proposed polyethylene resin compositions demonstrate poor ESCR. There is still a need for proposing resin compositions having improved physical properties in view of flexural modulus, flowability, and ESCR.

### SUMMARY

Embodiments of the present invention provide a polyethylene resin composition having excellent flowability and flexural modulus and high environmental stress crack resistance (ESCR) to cope with trends toward high-speed processing, slimness and lightness in manufacturing a molded product, and a molded product manufactured therefrom.

The above and other aspects of the present invention will be described in or be apparent from the following description of exemplary embodiments.

According to an aspect of the present invention, there is provided a polyethylene resin composition including 60 wt% to 90 wt% of an ethylene homopolymer (A) having a melt index of 700 g/10 minutes to 1500 g/10 minutes, as measured at 190 °C under a load of 2.16 kg, and 10 wt% to 40 wt% of ethylene or an α-olefin copolymer (B) having 3 to 20 carbon atoms, wherein the polyethylene resin composition having a melt index in the range of 0.6 g to 2.0 g/10 minutes, as measured at 190°C under a load of 2.16 kg, environmental stress crack resistance (ESCR) of 1,000 hours or more, a spiral flow length of 70 cm or greater, and a flexural modulus of 9,000 kgf/cm² or greater, wherein a ratio (C/D) of a melt index (C) of the polyethylene resin composition, as measured at 190°C under a load of 21.6 kg, to a melt index (D) of the polyethylene resin composition, as measured at 190°C under a load of 2.16 kg, is in the range of 120 to 200.

According to another aspect of the present invention, there is provided a molded product manufactured from the polyethylene resin composition.

As described above, according to the present invention, the polyethylene resin composition for use in a plastic bottle cap has high flowability in manufacturing a molded product, which makes it to easily attain high-speed processing performance, a high flexural modulus, which is advantageous in achieving slimness and lightness, and high environmental stress crack resistance (ESCR), by which long-term storage stability of a molded product is demonstrated.

### DETAILED DESCRIPTION

Hereinafter, the present invention will be described in detail.

The present invention provides a polyethylene resin composition comprising 60 wt% to 90 wt% of an ethylene homopolymer (A) having a melt index of 700 g/10 minutes to 1500 g/10 minutes, as measured at 190°C under a load of 2.16 kg, and 10 wt% to 40 wt% of ethylene or an α-olefin copolymer (B) having 3 to 20 carbon atoms, the polyethylene resin composition having a melt index in the range of 0.6 g to 2.0 g/10 minutes, as measured at 190°C under a load of 2.16 kg, environmental stress crack resistance (ESCR) of 1,000 hours or more, a spiral flow length of 70 cm or greater, and a flexural modulus of 9,000 kgf/cm² or greater.

The ethylene homopolymer (A) has a melt index (MI) in the range of 700 g to 1500 g/10 minutes, preferably not less than 800 g/10 minutes, as measured at 190°C under a load of 2.16 kg. If the 2.16 kg load MI of the ethylene homopolymer (A) is less than 700 g/10 minutes, the ESCR of the ethylene homopolymer (A) is less than 1,000 hours even while satisfying a spiral flow length of 70 cm or greater, a flexural modulus of not less than 9,000 kgf/cm², the long-term storage stability of a molded product manufactured from the ethylene homopolymer (A) may be deteriorated.

The polyethylene resin composition according to the present invention includes an ethylene-α-olefin copolymer (B) having 3 to 20 carbon atoms, preferably 3 to 8 carbon atoms. If the number of carbon atoms in α-olefin of the copolymer (B) is greater than 20, the reactivity may be lowered and the manufacturing cost of the resin may be greatly increased.

In addition, a blend ratio of the ethylene homopolymer (A) is 60 wt% or greater. If the blend ratio of the ethylene homopolymer (A) is lower than 60 wt%, the ESCR may be less than 1,000 hours, deteriorating long-term storage stability, even while satisfying a spiral flow length of 70 cm or greater and a flexural modulus of not less than 9,000 kgf/cm². In addition, if the blend ratio of the ethylene homopolymer (A) is greater than 90 wt%, the ESCR may be lowered.

According to an embodiment of the present invention, the melt index (MI) of the polyethylene resin composition is preferably in the range of 0.6 to 2.0 g/10 minutes, as measured at 190°C under a load of 2.16 kg. If the MI is less than 0.6 g/10 minutes, the spiral flow length of the polyethylene resin composition is less than 70 cm, the flowability may be lowered. If the MI is greater than 2.0 g/10 minutes, the ESCR is less than 1,000 hours, the long-term storage stability of a soda bottle cap may be undesirably deteriorated.

In addition, the polyethylene resin composition according to the present invention is 120 to 200 in the ratio (C/D) of the MI (C) measured at 190°C under a load of 21.6 kg to the MI (D) measured at 190°C under a load of 2.16 kg. If the ratio (C/D) is less than 120, even if the polyethylene resin composition satisfies the requirement of a flexural modulus being not less than 9,000 kgf/cm², it may have a spiral flow length of less than 70 cm, suggesting that the flowability is lowered, or it may have ESCR of less than 1,000 hours, suggesting that the long-term storage stability of a soda bottle cap is undesirably deteriorated.

In addition, the polyethylene resin composition according to the present invention preferably has a density in the range of 0.958 to 0.963 g/cm³. If the density of the polyethylene resin composition is lower than the range stated above, the polyethylene resin composition has a flexural modulus of less than 9,000 kgf/cm², and if the density of the polyethylene resin composition is higher than the range stated above, the polyethylene resin composition has ESCR of less than 1,000 hours with a spiral flow length of not less than 70 cm, while satisfying the requirement of a flexural modulus being not less than 9,000 kgf/cm², the long-term storage stability of a soda bottle cap may be undesirably deteriorated.

The polyethylene resin composition according to the present invention may further include 0.01 to 0.5 parts by weight, preferably 0.05 to 0.2 parts by weight, of an antioxidant and 0.01 to 0.3 parts by weight, preferably 0.05 to 0.2 parts by weight, of a neutralizer, based on 100 parts by weight of the polyethylene resin composition.

If the content of the antioxidant is less than 0.01 parts by weight, there may be a problem, such as discoloration during storage, or a change in the viscosity during processing. If the content of the antioxidant is greater than 0.5 parts by weight, the flavor or smell may be spoiled. If the content of the neutralizer is less than 0.01 parts by weight, there may be a problem, such as discoloration or a change in the viscosity during processing. If the content of the neutralizer is less than 0.3 parts by weight, there may be a change in the physical property, such as color or mechanical strength, during long-term storage.

Representative examples of the antioxidant may include 1,3,5-trimethyl-2,4,6-tris(3,5-di-tert-butyl-4-hydroxybenzyl)benzene, 1,6-bis[3-(3,5-di-tert-butyl-4-hydroxyphenyl)propionamido]hexane, 1,6-bis[3-(3,5-di-tert-butyl-4-hydroxyphenyl)propionamido]propane, tetrakis[methylene(3,5-di-tert-butyl-4-hydroxyhydrocinnamate)]methane), bis(2,6-di-tert-butyl-4-methylphenyl)pentaerythritol-di-phosphite and bis(2,4-di-tert-butylphenyl)pentraerythritol-di-phosphite.

The polyethylene resin composition according to the present invention may further include 0.01 ∼0.3 parts by weight of a neutralizer, based on 100 parts by weight of the polyethylene resin composition. Representative examples of the neutralizer may include calcium stearate, zinc stearate, magnesium aluminum hydroxy carbonate, zinc oxide, magnesium hydroxy stearate and a combination thereof.

The polyethylene resin composition according to the present invention may be molded into various kinds of plastic products, and those molded products can be easily manufactured by one skilled in the art using a method publicly known in the art to which the present invention pertains. Examples of a desired molded product may include a bottle cap.

The present invention will be understood in more detail with reference to examples and comparative examples and the following examples and comparative examples are provided only for illustrating the present invention, not for limiting the protection scope of the present invention.

Various physical properties of the polyethylene resin composition prepared in Examples and Comparative Examples are measured in the following manners:

### Melt Index (MI)

The melt index (MI) was measured at 190°C under loads of 2.16 kg and 21.6 kg in accordance with to ASTM D1238.

### Melt Flow Rate Ratio (MFRR)

The melt flow rate ratio (MFRR) defines a ratio MI21.6/MI2.16 of a melt index (MI21.6) measured at 190°C under a load of 21.6 kg to a melt index (MI2.16) measured at 190°C under a load of 2.16 kg.

### Density

The density was measured according to ASTM D1505.

### Environmental Stress Crack Resistance (ESCR)

The environmental stress crack resistance (ESCR) was measured according to ASTM D1693, Condition B, using 10 wt% Igepal aqueous solution commercially available from Rhodia as a test liquid. ESCR is the time when the possibility of cracking due to environmental stress occurs reaches 50%(to be referred to as F50).

### Spiral Flow Length (SFL)

To evaluate the flowability of a resin composition in a mold, an SI180III-F200 model injection device manufactured by Toyo Corporation was used and the mold had a wall thickness of 2 mm. The molding was performed under conditions of injection pressure being 1000 kgf/cm², injection temperature being 235°C, injection speed being 30 mm/sec, molding temperature being 50°C, and cooling time being 10 seconds.

### Flexural Modulus (FM)

The Flexural Modulus (FM) was measured according to ASTM D790.

### Example 1

A 2-stage polymerization process was performed using two polymerization vessels connected in series to each other by a continuous slurry polymerization method. A comonomer used herein was 1-butene. Only ethylene as a monomer was supplied to a first polymerization vessel and ethylene and 1-butene were supplied to a second polymerization vessel for being polymerized.

A melt index (1-stage MI) of an ethylene homopolymer (A) obtained in the first polymerization vessel, as measured at 190°C under a load of 2.16 kg, was 850 g/10 minutes and a blend ratio (B/R) of the obtained ethylene homopolymer (A) was 60 wt%, a blend ratio (100-B/R) of an ethylene-1-butene copolymer (B) obtained in the second polymerization vessel was 40 wt%, the melt index (MI) of a resin composition including a mixture of A and B was 0.7, the MFRR was 138, and the density was 0.962. The resin composition prepared in Example 1 had an SFL of 77 cm, an ESCR of 1800 hours, a flexural modulus of 10,300 kgf/cm², suggesting that excellent high-speed processing performance was demonstrated, the long-term storage stability of a soda bottle cap soda bottle was improved, and the slimness and lightness of a bottle cap was advantageously achieved, respectively. Evaluation results of various physical properties of the polyethylene resin compositions prepared in various Examples and Comparative Examples are summarized in Table 1.

### Example 2

Polymers (A) and (B) were prepared in the same manner as in Example 1, and a blend ratio B/R of the polymer (A) was changed to 63 wt%. The resin composition including a mixture of the polymers (A) and (B) had a melt index (MI) of 1.8, MFRR of 131, and a density of 0.958. The resin composition prepared in Example 2 had an SFL of 89 cm, suggesting that excellent high-speed processing performance was demonstrated. In addition, the resin composition prepared in Example 2 had an ESCR of 1,100 hours, which is smaller than that of Example 1 but is enough to secure the long-term storage stability of a soda bottle. The flexural modulus of the resin composition prepared in Example 2 was 9,100 kgf/cm², which is advantageous for achieving the slimness and lightness of a bottle cap.

### Comparative Example 1

Polymers (A) and (B) were prepared in the same manner as in Example 1, and a blend ratio B/R of the polymer (A) was changed into 54 wt%. The resin composition including a mixture of the polymers (A) and (B) had a melt index (MI) of 1.0, MFRR of 95, and a density of 0.955. In addition, the resin composition prepared in Comparative Example 1 had an SFL of not less than 70 cm and an ESCR of not less than 1,100 hours. However, the flexural modulus of the resin composition prepared in Comparative Example 1 was 8,600 kgf/cm², which is lower than that of the resin composition prepared in Example 1 or 2.

### Comparative Example 2

Polymers (A) and (B) were prepared in the same manner as in Example 1, and the first stage MI and the blend ratio (B/R) of the polymer (A) were changed into 600 g/10 minutes and 63 wt%, respectively. The resin composition including a mixture of the polymers (A) and (B) had a melt index (MI) of 1.1, MFRR of 123, and a density of 0.964. In addition, the resin composition prepared in Comparative Example 2 had an SFL of not less than 70 cm and a flexural modulus of not less than 9,000 kgf/cm². However, the ESCR of the resin composition prepared in Comparative Example 2 was 260 hours, which is poorer than that of the resin composition prepared in Example 1 or 2.

### Comparative Example 3

Polymers (A) and (B) were prepared in the same manner as in Example 1, and the resin composition including a mixture of the polymers (A) and (B) had a melt index (MI) of 0.4, MFRR of 145, and a density of 0.961. In addition, the resin composition prepared in Comparative Example 3 had an ESCR of not less than 1000 hours and a flexural modulus of not less than 9,000 kgf/cm². However, the SFL of the resin composition prepared in Comparative Example 3 was 63 cm, which is poorer than that of the resin composition prepared in Example 1 or 2.

### Comparative Example 4

Polymers (A) and (B) were prepared in the same manner as in Example 1, and the first stage MI and the blend ratio (B/R) of the polymer (A) were changed into 900 g/10 minutes and 58 wt%, respectively. The resin composition including a mixture of the polymers (A) and (B) had a melt index (MI) of 0.9, an MFRR of 108 and a density of 0.961. In addition, the resin composition prepared in Comparative Example 4 had an SFL of not less than 70 cm, and a flexural modulus of not less than 9,000 kgf/cm². However, the ESCR of the resin composition prepared in Comparative Example 4 was 900 hours, which is poorer than that of the resin composition prepared in Example 1 or 2.

### Comparative Example 5

Polymers (A) and (B) were prepared in the same manner as in Example 1, and the first stage MI was changed into 900 g/10 minutes. The resin composition including a mixture of the polymers (A) and (B) had a melt index (MI) of 2.2, an MFRR of 127 and a density of 0.959. In addition, the resin composition prepared in Comparative Example 5 had an SFL of not less than 70 cm, and a flexural modulus of not less than 9,000 kgf/cm². However, the ESCR of the resin composition prepared in Comparative Example 5 was 600 hours, which is poorer than that of the resin composition prepared in Example 1 or 2.

**Table 1**

| | Unit | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|---|
| 1^{st} stage MI | g/10min | 850 | 850 | 850 | 600 | 850 | 900 | 900 |
| B/R | wt% | 60 | 63 | 54 | 60 | 60 | 58 | 60 |
| MI2.16 kg | g/10 min | 0.7 | 1.8 | 1.0 | 1.1 | 0.4 | 0.9 | 2.2 |
| MI21.6 kg | g/10 min | 94 | 236 | 97 | 132 | 58 | 97 | 280 |
| MFRR | | 138 | 131 | 95 | 123 | 145 | 108 | 127 |
| Density | g/cm³ | 0.962 | 0.958 | 0.955 | 0.964 | 0.961 | 0.961 | 0.959 |
| SFL | cm | 77 | 89 | 71 | 77 | 63 | 74 | 96 |
| ESCR | F50,hr | 1800 | 1100 | 1200 | 260 | 2600 | 900 | 600 |
| FM | kgf/cm² | 10300 | 9100 | 8600 | 11000 | 10000 | 10000 | 9500 |

### Industrial Applicability

The polyethylene resin composition according to the present invention demonstrates high flowability, a high flexural modulus and high ESCR in manufacturing a molded product of a bottle cap, suggesting that high-speed processing performance can be easily achieved, the slimness and lightness of a bottle cap can be advantageously achieved, and the long-term storage stability of a soda bottle cap soda bottle is improved, respectively.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A polyethylene resin composition comprising:
60 wt% to 90 wt% of an ethylene homopolymer (A) having a melt index of 700 g/10 minutes to 1500 g/10 minutes, as measured at 190°C under a load of 2.16 kg; and
10 wt% to 40 wt% of ethylene or an α-olefin copolymer (B) having 3 to 20 carbon atoms, the polyethylene resin composition having a melt index in the range of 0.6 g to 2.0 g/10 minutes, as measured at 190°C under a load of 2.16 kg, environmental stress crack resistance (ESCR) of 1,000 hours or more, a spiral flow length of 70 cm or greater, and a flexural modulus of 9,000 kgf/cm2 or greater, wherein a ratio (C/D) of a melt index (C) of the polyethylene resin composition, as measured at 190°C under a load of 21.6 kg, to a melt index (D) of the polyethylene resin composition, as measured at 190°C under a load of 2.16 kg, is in the range of 120 to 200.

2. The polyethylene resin composition of claim 1, wherein a density of the polyethylene resin composition is in the range of 0.958 to 0.963 g/cm3.

3. The of polyethylene resin composition claim 1, further comprising at least one of 0.01 to 0.5 parts by weight of an antioxidant and 0.01 to 0.3 parts by weight of a neutralizer, based on 100 parts by weight of the polyethylene resin composition.

4. The polyethylene resin composition of claim 3, wherein the antioxidant is one or more selected from the group consisting of
1,3,5-trimethyl-2,4,6-tris(3,5-di-tert-butyl-4-hydroxybenzyl)benzene,
1,6-bis[3-(3,5-di-tert-butyl-4-hydroxyphenyl)propionamido]hexane,
1,6-bis[3-(3,5-di-tert-butyl-4-hydroxyphenyl)propionamido]propane, tetrakis[methylene(3,5-di-tert-butyl-4-hydroxyhydrocinnamate)]methane),
bis(2,6-di-tert-butyl-4-methylphenyl)pentaerythritol-di-phosphite and
bis(2,4-di-tert-butylphenyl)pentraerythritol-di-phosphite.

5. The polyethylene resin composition of claim 3, wherein the neutralizer is calcium stearate, zinc stearate, magnesium aluminum hydroxy carbonate, zinc oxide, magnesium hydroxy stearate or a combination thereof.

6. A molded product manufactured from the polyethylene resin composition of one of claims 1 to 5.

7. The molded product of claim 6, which is a bottle cap.

## Patentansprüche

1. Polyethylenharzzusammensetzung, umfassend:
60 Gew.-% bis 90 Gew.-% eines Ethylen-Homopolymers (A) mit einem Schmelzindex von 700 g/10 Minuten bis 1500 g/10 Minuten, gemessen bei 190°C unter einer Last von 2,16 kg; und
10 Gew.-% bis 40 Gew.-% Ethylen oder eines α-Olefin-Copolymers (B) mit 3 bis 20 Kohlenstoffatomen, wobei die Polyethylenharzzusammensetzung einen Schmelzindex im Bereich von 0,6 g bis 2,0 g/10 Minuten, gemessen bei 190°C unter einer Last von 2,16 kg, eine umgebungsbedingte Spannungsrissbeständigkeit (ESCR) von 1.000 Stunden oder mehr, eine Spiralströmungslänge von 70 cm oder mehr und einen Biegemodul von 9.000 kgf/cm² oder mehr aufweist, wobei ein Verhältnis (C/D) eines Schmelzindexes (C) der Polyethylenharzzusammensetzung, gemessen bei 190°C unter einer Last von 21,6 kg, zu einem Schmelzindex (D) der Polyethylenharzzusammensetzung, gemessen bei 190°C unter einer Last von 2,16 kg, im Bereich von 120 bis 200 liegt.

2. Polyethylenharzzusammensetzung nach Anspruch 1, wobei eine Dichte der Polyethylenharzzusammensetzung im Bereich von 0,958 bis 0,963 g/cm³ liegt.

3. Polyethylenharzzusammensetzung nach Anspruch 1, ferner umfassend mindestens eines von 0,01 bis 0,5 Gewichtsteilen Antioxidationsmittel und 0,01 bis 0,3 Gewichtsteilen Neutralisationsmittel, bezogen auf 100 Gewichtsteile der Polyethylenharzzusammensetzung.

4. Polyethylenharzzusammensetzung nach Anspruch 3, wobei das Antioxidationsmittel eines oder mehr ist, ausgewählt aus der Gruppe, bestehend aus 1,3,5-Trimethyl-2,4,6-tris(3,5-di-tert-butyl-4-hydroxybenzyl)benzol, 1,6-Bis[3-(3,5-di-tert-butyl-4-hydroxyphenyl)propionamido]hexan, 1,6-Bis[3-(3,5-di-tert-butyl-4-hydroxyphenyl)propionamido]propan,
Tetrakis[methylen(3,5-di-tert-butyl-4-hydroxyhydrocinnamat)]methan), Bis(2,6-di-tert-butyl-4-methylphenyl)pentaerythrit-di-phosphit und Bis(2,4-di-tert-Butylphenyl)pentaerythrit-di-phosphit.

5. Polyethylenharzzusammensetzung nach Anspruch 3, wobei das Neutralisationsmittel Calciumstearat, Zinkstearat, Magnesiumaluminiumhydroxycarbonat, Zinkoxid, Magnesiumhydroxystearat oder eine Kombination davon ist.

6. Formprodukt, hergestellt aus der Polyethylenharzzusammensetzung nach einem der Ansprüche 1 bis 5.

7. Formprodukt nach Anspruch 6, das ein Flaschenverschluss ist.

## Revendications

1. Composition de résine de polyéthylène comprenant :
60 % en poids à 90 % en poids d'un homopolymère d'éthylène (A) ayant un indice de fusion de 700 g/10 minutes à 1 500 g/10 minutes, mesuré à 190°C sous une charge de 2,16 kg ; et
10 % en poids à 40 % en poids d'éthylène ou d'un copolymère d'α-oléfine (B) ayant 3 à 20 atomes de carbone, la composition de résine de polyéthylène ayant un indice de fusion dans la plage de 0,6 g à 2,0 g/10 minutes, mesuré à 190°C sous une charge de 2,16 kg, une résistance à la fissuration sous contrainte environnementale (ESCR) de 1 000 heures ou plus, une longueur d'écoulement en spirale de 70 cm ou plus, et un module de flexion de 9 000 kgf/cm² ou plus, dans laquelle un rapport (C/D) d'un indice de fusion (C) de la composition de résine de polyéthylène, tel que mesuré à 190°C sous une charge de 21,6 kg, sur un indice de fusion (D) de la composition de résine de polyéthylène, tel que mesuré à 190°C sous une charge de 2,16 kg, est de l'ordre de 120 à 200.

2. Composition de résine de polyéthylène selon la revendication 1, dans laquelle une densité de la composition de résine de polyéthylène se situe dans la plage de 0,958 à 0,963 g/cm³.

3. Composition de résine de polyéthylène selon la revendication 1, comprenant en outre au moins 0,01 à 0,5 partie en poids d'un antioxydant et 0,01 à 0,3 partie en poids d'un neutralisant, sur la base de 100 parties en poids de la composition de résine de polyéthylène.

4. Composition de résine de polyéthylène selon la revendication 3, dans laquelle l'antioxydant est un ou plusieurs sélectionnés dans le groupe consistant en
1,3,5-triméthyl-2,4,6-tris(3,5-di-tert-butyl-4-hydroxybenzyle)benzène, 1,6-bis[3-(3,5-di-tert-butyl-4-hydroxyphényl)propionamido]hexane, 1,6-bis[3-(3,5-di-tert-butyl-4-hydroxyphényl)propionamido]propane, tétrakis[méthylène(3,5-di-tert-butyl-4-hydroxyhydrocinnamate)]méthane), bis(2,6-di-tert-butyl-4-méthylphényl)pentaérythritol-di-phosphite, et bis(2,4-di-tert-butylphényl)pentraérythritol-di-phosphite.

5. Composition de résine de polyéthylène selon la revendication 3, dans laquelle le neutralisant est le stéarate de calcium, le stéarate de zinc, l'hydroxycarbonate de magnésium et d'aluminium, l'oxyde de zinc, l'hydroxystéarate de magnésium, ou une combinaison de ceux-ci.

6. Produit moulé fabriqué à partir de la composition de résine de polyéthylène selon l'une des revendications 1 à 5.

7. Produit moulé selon la revendication 6, qui est un bouchon de bouteille.
